(19) Europäisches Patentamt

European Patent Office

Office européen des brevets

(11) EP 0 678 536 B1

## (12) EUROPÄISCHE PATENTSCHRIFT

(45) Veröffentlichungstag und Bekanntmachung des Hinweises auf die Patenterteilung:
**14.07.1999 Patentblatt 1999/28**

(51) Int Cl.$^6$: **C08G 18/08**, C08G 18/62

(21) Anmeldenummer: **95105988.0**

(22) Anmeldetag: **21.04.1995**

(54) **Wässrige Dispersion auf der Basis von Polymer/Polyurethan-Harzen, Verfahren zu deren Herstellung, Überzugsmittel und deren Verwendung**

Aqueous dispersion based on polymer/polyurethane resins, process for its preparation, coatings and their use

Dispersion aqueuse à partir de résines de polymère-polyuréthane, procédé pour sa préparation, revêtements et leur utilisation

(84) Benannte Vertragsstaaten:
**AT BE DE ES FR GB GR IT NL PT SE**

(30) Priorität: **21.04.1994 DE 4413737**

(43) Veröffentlichungstag der Anmeldung:
**25.10.1995 Patentblatt 1995/43**

(73) Patentinhaber: **Herberts Gesellschaft mit beschränkter Haftung
42285 Wuppertal (DE)**

(72) Erfinder:
- **Göbel, Armin
  D-45549 Hasslinghausen (DE)**
- **Patzschke, Hans-Peter, Dr.
  D-42279 Wuppertal (DE)**

(74) Vertreter: **Türk, Gille, Hrabal
Patentanwälte - European Patent Attorneys,
Brucknerstrasse 20
40593 Düsseldorf (DE)**

(56) Entgegenhaltungen:
**EP-A- 0 272 346          EP-A- 0 510 572
DE-A- 4 127 680          DE-A- 4 226 270**

- **CHEMICAL ABSTRACTS, vol. 120, no. 2, 24. Januar 1994, Columbus, Ohio, US; abstract no. 33027p, 'AQUEOUS ACRYLIC POLYURETHANES COATING MATERIALS' & JP-A-05 186 543 (DAINIPPON INK & CHEMICALS)**

**Beschreibung**

Die Erfindung betrifft wäßrige Bindemitteldispersionen auf der Basis von hydroxylgruppenhaltigen Polymeren, ethylenisch ungesättigter Monomerer und carboxyl- sowie hydroxylgruppenhaltiger harnstoffgruppenfreier Polyurethanharze, die einer gemeinsamen Kettenverlängerung unterzogen wurden. Sie betrifft auch das Verfahren zu deren Herstellung, sowie daraus herstellbare wäßrige Überzugsmittel, die insbesondere als Basislacke oder Decklacke geeignet sind.

In der Automobilindustrie werden Metall- und Kunststoffteile mit mehrschichtigen Überzügen versehen. Sie dienen zum Korrosionsschutz der Substrate, sollen aber auch eine gute dekorative Wirkung aufweisen. Es handelt sich dabei im allgemeinen um Mehrschichtüberzüge auf Basis einer Grundierung und einer oder mehreren Folgeschichten, z.B. Basislackschichten, Decklackschichten, die dann mit einem transparenten Klarlack als Folgebeschichtung versehen werden können.

Wäßrige Überzugsmittel mit geringen Anteilen an organischen Lösemitteln sind bekannt. Ebenso sind Polyurethanharzdispersionen bekannt, die mit ionischen Gruppen in der Wasserphase stabilisiert werden.

Aus der DE-A-41 15 948 sind Bindemittelgemische für Metallic-Basisschichten bekannt, die aus speziellen Polyurethanelastomeren, Polyesterharzen und Aminoharzen bestehen und die gegebenenfalls polymere vernetzte Acrylatmikrogele enthalten. Diese Mischungen aus Bindemittel und Acrylat-Mikroteilchen können dann zu Mehrschichtlackierungen weiterverarbeitet werden.

In der EP-A-0 379 158 werden thermoplastische Überzugsmittel beschrieben auf Basis von Polyurethanen, die über ionische Gruppen stabilisiert werden, sowie bis zu 12 % Acrylatharze als zugemischte Komponente enthalten. Diese werden dann zum Beschichten von Kunststoffsubstraten eingesetzt.

In der DE-A-41 09 477 werden Polyurethandispersionen beschrieben auf Basis von durch ionische Gruppen stabilisierten Polyester-Isocyanatumsetzungsprodukten, die gegebenenfalls kettenverlängert werden. Nach Zumischen von bis zu 80 % Acrylatharzen, können daraus reaktive Folienkleber hergestellt werden.

Alle diese bekannten Überzugsmittel auf Basis von Mischungen von Acrylat und Polyurethanharzen haben den Nachteil, daß sie Probleme in der Lagerstabilität bereiten. Außerdem ergeben sich häufig Probleme mit der Zwischenschichthaftung, wenn weitere Folgeschichten appliziert werden.

In JP-A-0 410 361 4 werden Urethan-Acryl-Copolymere beschrieben. Deren Herstellung erfolgt durch Bereitstellung eines harnstoffgruppenhaltigen Urethanprepolymers in Form einer wäßrigen Dispersion. In dieser wäßrigen Dispersion werden Acrylmonomere polymerisiert. Die erhaltene wäßrige Dispersion wird mit einem Isocyanatprepolymer umgesetzt. Die erhaltenen Copolymeren sind aufgrund der Herstellungsweise inhomogen und können beim Einsatz in Überzugsmitteln zu Verträglichkeitsproblemen führen, die sich ebenfalls durch verminderte Lagerbeständigkeit und Trübungen, sowie durch Verträglichkeitsprobleme mit weiteren Bindemittelkomponenten, wie z.B. Polyestern, äußern können.

In der DE-A-26 63 307 wird die Emulsionspolymerisation von Vinylmonomeren in Polyurethandispersionen beschrieben. Diese Dispersionen dienen auch zur Herstellung von Überzügen. Sie entstehen durch Emulsionspolymerisation in Polyurethandispersionen, d.h. es entstehen überwiegend reine Acrylatpolymere als Mischung. Solche Polymerdispersionen werden auch in der DE-A-37 22 005 beschrieben. Sie haben den Nachteil, daß auch hier Probleme in der Lagerstabilität und in der Zwischenschichthaftung auftreten. Außerdem führen die notwendigen externen Emulgatoren zu schlechter Wasserfestigkeit bei Verwendung in Mehrschichtlackierungen.

Aufgabe der vorliegenden Erfindung ist es, wäßrige Bindemitteldispersionen auf Basis von Polyurethanen und Polymeren auf der Basis ethylenisch ungesättigter Monomerer zur Verfügung zu stellen, die eine gute Lagerstabilität, gute anwendungstechnische Eigenschaften in Überzugsmitteln, insbesondere in Metallic-Lacken, sowie eine gute Zwischenschichthaftung zu nachfolgenden Lackierungen aufweisen. Weiterhin sollen sie eine ausgezeichnete Witterungsstabilität insbesondere bei Verwendung in Einschichtdecklacken aufweisen.

Diese Aufgabe wird dadurch gelöst, daß eine wäßrige, insbesondere emulgatorfreie Emulsion von vernetzungsfähigen, Hydroxylgruppen enthaltenden Polymerisat-Polyurethan-Harzen zur Verfügung gestellt wird. Diese erfindungsgemäße wäßrige Dispersion ist erhältlich durch gemeinsame Kettenverlängerung von

I. einem oder mehreren, ionische Gruppen tragenden, harnstoffgruppenfreien Polyurethanen mit im wesentlichen endständigen OH-Gruppen, mit einem Zahlenmittel der Molmasse (Mn) von 1000 bis 10000, einer Säurezahl von 5 bis 50 und einer OH-Zahl von 5 bis 50, und

II. einem oder mehreren hydroxylgruppenhaltigen Polymeren auf der Basis ethylenisch ungesättigter Monomerer, mit einer Säurezahl zwischen 0 und 20, einer OH-Zahl zwischen 150 und 400 und einem Zahlenmittel der Molmasse (Mn) zwischen 2000 und 20000, wobei das molare Verhältnis der Hydroxylgruppen der Komponente I zu denen der Komponente II bei 1 : 6 bis 1 : 0,5 liegt, mit

III. einem oder mehreren Diisocyanaten, in einem molaren Verhältnis der OH-Gruppen aus den Komponenten I und II zu den : NCO-Gruppen der Komponente III von 1,05 : 1 bis 10 : 1,

in einem wasserfreien Medium, Neutralisation mindestens eines Teils von vorhandenen in ionische Gruppen überführbaren Gruppen sowie Überführung des entstehenden Produktes in die Wasserphase.

Die so erhaltene erfindungsgemäße Bindemitteldispersion kann gegebenenfalls unter Zusatz von weiteren Bindemitteln, Vernetzern, Pigmenten und/oder Füllstoffen sowie lacküblichen Additiven zu wäßrigen Überzugsmitteln weiterverarbeitet werden.

Weitere Gegenstände der Erfindung bilden das nachstehend beschriebene Verfahren zur Herstellung der erfindungsgemäßen Dispersionen, sowie daraus herstellbare wäßrige Überzugsmittel, die im folgenden beschrieben werden.

Die erfindungsgemäße Dispersion wird im folgenden als Acrylat/Polyurethandispersion bezeichnet. Sie enthält Umsetzungsprodukte von Hydroxylgruppen enthaltenden Acrylatpolymeren mit funktionalisierten harnstoffgruppenfreien Polyurethanharzen und Isocyanaten, dabei aber keine Anteile an freien, nicht umgesetzten Acrylatpolymeren. Es handelt sich um Harnstoffgruppen-freie Dispersionen.

Als Komponente I können harnstoffgruppenfreie Polyurethane eingesetzt werden, wie sie z.B. als funktionalisierte Polyurethanbindemittel bekannt sind. Es handelt sich dabei um Polyurethanharze, die über neutralisierte ionische Gruppen gegebenenfalls in die Wasserphase überführt werden können. Sie enthalten zusätzlich mindestens zwei isocyanataktive Gruppen, über die sie weitere Reaktionen eingehen können. Besonders bevorzugt sind OH-Gruppen. Solche Polyurethanbindemittel sind beispielsweise in der DE-A-43 23 896, DE-A-42 28 510, DE-A-42 24 617, in der EP-A-0 089 497, sowie DE-A-40 00 889 beschrieben.

Es handelt sich dabei im allgemeinen um Bindemittel, herstellbar auf Basis von Polyesterpolyolen, Polycarbonatpolyolen und/oder Polyetherpolyolen, insbesondere Diolen, die gegebenenfalls unter Verwendung niedermolekularer gegebenenfalls polyfunktionaler Hydroxylverbindungen, Di- bzw. Polyisocyanaten sowie zusammen mit gegenüber Isocyanaten difunktionellen Verbindungen, die keine Harnstoffgruppen bilden, die in ionische Gruppen überführbare Substituenten oder ionische Gruppen aufweisen, umgesetzt werden. Dabei können isocyanatgruppenhaltige oder hydroxylgruppenhaltige Prepolymere entstehen, die gegebenenfalls kettenverlängert werden. Es können dabei z.B. die in der Lackchemie üblichen aromatischen oder aliphatischen Polyester-, Polyetherpolyolbausteine eingesetzt werden. Ebenso können z.B. die in der Lackchemie üblichen aromatischen bevorzugt aliphatischen Isocyanate eingesetzt werden. Es ist zweckmäßig solche Komponenten zu wählen, von denen bekannt ist, daß sie möglichst witterungsstabil sind und keine Neigung zum Vergilben zeigen.

Die erfindungsgemäß einsetzbaren harnstoffgruppenfreien Polyurethanpolymere der Komponente I sollen eine Molmasse (Mn) von 1000 bis 10000 aufweisen. Die Hydroxylgruppen weisen eine OH-Zahl zwischen 5 und 50, insbesondere über 10 und unter 40 auf. Es können auch andere reaktive Gruppen, z.B. SH, NH, vorhanden sein. Sie sollen in ionische Gruppen überführbare Substituenten oder ionische Gruppen tragen, insbesondere in anionische Gruppen überführbare Gruppen, wie Sulfonsäure-, Phosphonsäure- oder Carbonsäuregruppen. Bevorzugt werden sterisch gehinderte Carbonsäuregruppen. Die Säurezahl soll zwischen 5 und 50 liegen, insbesondere unter 30; sie gewährleistet nach Neutralisation mindestens eines Teils dieser Gruppen eine stabile Dispergierung der Bindemittel in der Wasserphase. Gegebenenfalls ist es möglich, daß anteilsweise auch andere polare, hydrophile Gruppen im Molekül vorhanden sind. Diese verstärken die Stabilisierung der wäßrigen Dispersionsform. Bevorzugt sind die Polyurethanpolyole linear aufgebaut.

Die Herstellung der Komponente I kann auf unterschiedliche Art und Weise erfolgen. So ist es einerseits möglich mit einem Unterschuß an Isocyanatgruppen zu arbeiten, wobei direkt OH-funktionelle Polyurethanpolyole erhalten werden. Diese können gegebenenfalls über Isocyanate kettenverlängert werden. Es ist aber auch möglich, mit einem Überschuß an Isocyanaten zu arbeiten; dabei erhält man mit Isocyanat terminierte Polyurethanprepolymere. Diese können durch Umsetzung mit Diolen oder anderen isocyanatreaktiven Verbindungen, bei denen sich keine Harnstoffgruppen bilden, kettenverlängert werden. Eine weitere Möglichkeit besteht darin, OH-Gruppen haltige Polyurethanprepolymere zu erzeugen, die zusätzlich CH-acide Gruppen im Molekül aufweisen. Diese Harze können dann über die CH-aciden Gruppen z.B. mit Aldehyden kettenverlängert werden.

Die Komponente I kann separat hergestellt und gelagert werden. Bevorzugt wird sie jedoch erzeugt und stufenweise weiter umgesetzt.

Die Synthese der Polyurethanpolyole der Komponente I erfolgt im allgemeinen in wasserfreier Form. Es ist möglich zur Herabsetzung der Viskosität organische, nicht mit Isocyanatgruppen reaktive Lösemittel zuzusetzen. Bevorzugt werden dabei solche Lösemittel ausgewählt, die nach einer Überführung in die Wasserphase nicht zu störenden Effekten im Überzugsmittel führen. Besonders geeignet sind mit Wasser mischbare Lösungsmittel. Gegebenenfalls ist es möglich, die Menge der Lösemittel durch Destillation zu reduzieren.

Als Komponente II können bekannte Polymere eingesetzt werden. Es handelt sich dabei um Polymere auf Basis von ungesättigten Monomeren, die gegebenenfalls auch weitere reaktive Gruppen aufweisen können. Bevorzugt werden Polyhydroxyacrylatharze. Sie werden bevorzugt durch Lösungspolymerisation nach bekannten Verfahren hergestellt. Beispielsweise kann eine Polymerisation radikalisch oder ionisch, z.B. Temperaturen zwischen 30 bis 140°C, z.B. in nicht reaktiven Lösemitteln erfolgen. Als ethylenisch ungesättigte Monomere kommen praktisch alle radikalisch polymerisierbaren Monomeren in Frage. Über die Auswahl der Monomeren können verschiedene Eigenschaften, wie z.B. Glasübergangstemperatur, Löslichkeit und Reaktivität des Polyacrylatpolymeren beeinflußt werden.

Beispiele für ungesättigte Monomere sind Acrylsäurealkylester, Methacrylsäurealkylester, Maleinsäure- und/oder Fumarsäuredialkylester wobei der Alkylrest jeweils ein $C_1$- bis $C_{15}$-Alkylrest, linear oder verzweigt oder cycloaliphatisch ist. Beispiele für weitere copolymerisierbare Monomere sind Styrol oder substituierte Styrole, Vinyltoluol, (Meth)Acrylamid und/oder (Meth)Acrylnitril. Unter (Meth)acryl wird hier Acryl und/oder Methacryl verstanden. Beispiele für einpolymerisierbare funktionelle Monomere sind (Meth)Acrylsäurealkylamide mit $C_2$- bis $C_8$-Alkylresten; zur Erzielung der gewünschten OH-Zahlen und OH-Funktionalitäten werden auch entsprechende hydroxylgruppenhaltige Monomere, z.B. (Meth)Acrylsäurehydroxyalkylester einpolymerisiert. Diese enthalten bevorzugt zumindest teilweise sekundäre Hydroxylgruppen. Beispiele hierfür sind Acrylsäure- und Methacrylsäureester von 1,2-Alkandiolen mit 1 bis 12 Kohlenstoffatomen, beispielsweise Hydroxypropyl(meth)acrylat, Hydroxybutyl(meth)acrylat sowie Hydroxyalkyl(meth) acrylamide. Weitere Verbindungen die copolymerisiert werden können sind z.B. Allylalkohol, Monovinylether von Polyolen. Die entstehenden polymeren Harze sollen im wesentlichen linear aufgebaut sein. Geringe Anteile von polyungesättigten Monomeren sind möglich.

Die entstehenden polymeren Harze sollen ein Zahlenmittel der Molmasse von 2000 bis 20000 aufweisen, insbesondere unter 10000. Es handelt sich bevorzugt um Polyhydroxyverbindungen mit einer Funktionalität über 5, besonders bevorzugt über 10, OH-Gruppen pro Molekül mit einer OH-Zahl von 150 bis 400, bevorzugt von 200 bis 350. Die Säurezahl der polymeren Harze soll zwischen 0 bis 20 betragen, insbesondere soll die Säurezahl kleiner 5, besonders bevorzugt unter 2 und insbesondere unter 1 sein. Die entstehenden Harze sollen weitgehend linear aufgebaut und bevorzugt frei von Vernetzungen sein. Die entstehenden Harze können in organischen Lösemitteln gelöst sein. Dabei ist darauf zu achten, daß diese Lösemittel nicht mit Isocyanaten reaktiv sind. Es ist bevorzugt, wenn die Molmasse der Harze im allgemeinen oberhalb der der Polyurethanpolyole der Komponente I liegen.

Als Komponente III können für die Herstellung von Polyurethanen bekannte organischen Polyisocyanate insbesondere Diisocyanate eingesetzt werden. Es können aliphatische, aromatische und/oder cycloaliphatische Isocyanate, insbesondere cycloaliphatische Isocyanate eingesetzt werden. Beispiele für solche Isocyanate sind Trimethylendiisocyanat, Tetramethylendiisocyanat, Pentamethylendiisocyanat, Hexamethylendiisocyanat, Propylendiisocyanat, Ethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 1-Isocyanatomethyl-5-isocyanato-1,3,3-trimethylcyclohexan, Bis-(4-isocyanatocyclohexyl)methan, Bis-(4-isocyanatophenyl)methan, 4,4-Diisocyanatodiphenylether, 1,5-Dibutylpentamethylendiisocyanat, Tetramethylxylylendiisocyanat, 2,3-Bis-(8-isocyanato-octyl)-4-octyl-5-hexylcyclohexan. Es können auch Polyisocyanate eingesetzt werden, bei denen die die Zahl 2 überschreitende Funktionalität blockiert worden ist.

Als Polyisocyanate können anteilsweise die bekannten drei- und mehrwertigen Lackpolyisocyanate eingesetzt werden. Dabei handelt es sich z.B. um Umsetzungsprodukte von Diisocyanaten zu Oligomeren wie z.B. Isocyanurate, Allophonate, Biurete oder Umsetzungsprodukte mit polyfunktionellen Alkoholen.

Der Bindemittelanteil der erfindungsgemäßen Dispersion wird hergestellt durch Mischen der Komponente I mit der Komponente II, gegebenenfalls inertem organischen Lösemittel und der Komponente III. Dabei werden die Komponenten I und II mit der Komponente III so gemischt, daß molar betrachtet, ein Mischungsverhältnis der gesamten OH-Gruppen zu den NCO-Gruppen von 1,05 : 1 bis 10 : 1, bevorzugt 1,5 bis 8,5 : 1 hergestellt wird. Das entstehende Produkt ist also OH-funktionell. Die Mischungsverhältnisse der Komponente I sowie der Komponente II werden so gewählt, daß molar betrachtet, das Verhältnis der Hydroxylgruppen von I zu II zwischen 1 : 6 und 1 : 0,5 liegt. Bevorzugt liegt das Verhältnis zwischen 1 : 4 und 1 : 1.

Dabei kann so vorgegangen werden, daß die Polyurethankomponente I hergestellt wird durch Umsetzung eines Diisocyanats mit den NCO-reaktiven, die keine Harnstoffgruppen bilden, ionische Gruppen enthaltenen Verbindungen. Diese Produkte werden dann mit einem Diolbaustein, z.B. einem Polyester/Polyetherdiolbaustein sowie gegebenenfalls einem niedermolekularen Polyol und gegebenenfalls weiterem Isocyanat zu dem Polyurethandiol umgesetzt. Ebenso ist es jedoch auch möglich, diese Reaktion unter Bildung der Komponente I in einer Einstufenreaktion durchzuführen.

Zu diesem Polyurethanbaustein wird dann die Isocyanatkomponente sowie gleichzeitig oder danach das hydroxylgruppenhaltige Polymerisat der olefinisch ungesättigten Verbindung zugegeben. Es wird gründlich homogenisiert und gegebenenfalls die Viskosität mit Lösemitteln eingestellt. Ebenso ist jedoch auch eine andere Reihenfolge der Zugabe der Komponenten möglich.

Eine weitere Synthesemethode gibt zu dem Diolbaustein, z.B. Polyesterbaustein bei der direkten Synthese der Komponente I schon höhere Isocyanatmengen der Komponente III hinzu, um zu diesem Reaktionsgemisch dann die Polyacrylat-Komponente II zuzusetzen. Es kann bei dieser Methode also ein isocyanatterminiertes Zwischenprodukt durchlaufen werden.

Um die Umsetzung mit dem Isocyanat zu beschleunigen, kann es gegebenenfalls günstig sein die Temperatur zu erhöhen oder geeignete Katalysatoren, z.B. übliche tertiäre Amine oder übliche organische Zinnverbindungen, zuzusetzen. Nach Reaktionsende wird das Umsetzungsprodukt ganz oder teilweise neutralisiert, sofern es nicht bereits ionische Gruppen in ausreichender Menge enthält.

Das entstehende Produkt weist bevorzugt eine zahlenmittlere Molmasse von etwa 5000 bis 100000 auf. Der vernetzte Anteil beträgt insbesondere 1 bis 20 %, bevorzugt von 3 bis 15 %, besonders bevorzugt von 4 bis 8 %, bezogen auf das Festkörpergewicht der Probe. Der vernetzte Anteil ergibt sich als unlöslicher Anteil in Tetrahydrofuran. Er wird bestimmt, in dem man eine Probe mit ca. 0.3 g Festharz mit ca. 30 ml Tetrahydrofuran extrahiert. Nach Abtrennung des Tetrahydrofurans werden die unlöslichen Teile 30 Minuten bei 150°C getrocknet und gewogen. Es weist eine Vielzahl von OH-Gruppen auf. Die Säurezahl soll bevorzugt unter 30 liegen.

Als Neutralisationsmittel für saure, zur Anionenbildung befähigte Gruppen kommen z.B. die bekannten organischen Amine oder Ammoniak in Betracht. Es handelt sich dabei um primäre, sekundäre, insbesondere tertiäre Amine, die gegebenenfalls noch weitere funktionelle Gruppen tragen könen. Insbesondere sind auch Dialkylalkanolamine bzw. Alkyldialkanolamine geeignet. Sie können der organischen Bindemittellösung (dem erhaltenen Reaktionsprodukt aus I, II und III) zugesetzt werden oder sie werden als wäßrige Lösung eingearbeitet. Nach gründlichem Homogenisieren kann das neutralisierte Produkt mit Wasser verdünnt werden. Es entsteht dabei eine niedrigviskose stabile Dispersion.

Gegebenenfalls kann es notwendig sein, die bei der Herstellung eingesetzten organischen Lösemittel zu entfernen. Das kann z.B. durch Destillation geschehen. Diese kann durch Anlegen eines Unterdrucks beschleunigt werden. Insbesondere sollten solche Lösemittel aus der Bindemitteldispersion abdestilliert werden, die bei einer Verwendung als Lackbindemittel zu störenden Eigenschaften führen.

Andererseits kann es günstig sein, weitere speziell ausgewählte organische Lösemittel zuzusetzen, um die Eigenschaften der Dispersion zu beeinflussen. So ist es beispielsweise möglich durch Zugabe von zumindest teilweise mit Wasser mischbaren organischen Lösemitteln, z.B. Glykolen oder Glykolethern, die Stabilität bzw. Wassermischbarkeit der Bindemitteldispersion zu erhöhen. Weiterhin können solche Lösemittel den Verlauf des Überzugsmittels beschleunigen.

Aus den erfindungsgemäßen wäßrigen Bindemitteldispersionen können organische Überzugsmittel hergestellt werden. Diese können entweder physikalisch trocknend oder chemisch vernetzend sein. Dazu ist es möglich den Bindemitteldispersionen weitere Bindemittel und/oder gegebenenfalls Vernetzerharze zuzusetzen. Diese können entweder in wäßriger Form vorliegen oder sie werden in Form eines organisch gelösten Bindemittels zugesetzt. Die Menge der zusätzlichen Bindemittel und Vernetzer kann bis zu 50 Gew.-% bezogen auf das gesamte Bindemittel (Harzfestkörper) betragen.

Die im Überzugsmittel vorhandenen zusätzlichen weiteren Bindemittelkomponenten können beispielsweise wasserverdünnbare Polyesterharze und/oder wasserverdünnbare Polyacrylatharze und/oder acrylierte Polyesterharze sowie weitere andersartige reaktive oder nicht-funktionelle Polyurethan-Dispersionen, zusammen mit gegebenenfalls üblichen Vernetzern, wie Melaminharzen und/oder Phenolharzen und/oder blockierten Polyisocyanaten sein.

Wasserverdünnbare Polyester sind beispielsweise solche mit freien Carboxylgruppen, d.h. Polyester mit hoher Säurezahl. Es handelt sich um die üblichen bekannten Polyester auf Basis von Polyolen und Polycarbonsäuren, die noch freie Carboxylgruppen und gegebenenfalls Hydroxylgruppen enthalten. Die wasserverdünnbaren Polyacrylatharze können ebenso wie die oben beschriebenen Polyesterharze freie Carboxylgruppen und gegebenenfalls Hydroxylgruppen enthalten. Es handelt sich in der Regel um Acryl- bzw. Methacrylcopolymerisate, wobei die Carboxylgruppen aus den Anteilen an Acryl- oder Methacrylsäure stammen.

Unter zusätzlichen Polyurethandispersionen sind beispielsweise solche zu verstehen, die in der DE-A-36 28 125 beschrieben werden. Es sind anionisch stabilisierte Polyurethan-Dispersionen, die durch Umsetzung von Polyolen, Diisocyanaten, ionischen Verbindungen sowie Kettenverlängerung mit Aminen entstehen.

Zu als Vernetzer geeigneten Aminharzen zählen beispielsweise hydrophile oder hydrophobe Kondensate, die durch Umsetzung von Aminotriazinen und Amidotriazinen mit Aldehyden hergestellt werden. Nach bekannten technischen Verfahren werden Amine oder Aminogruppen tragende Verbindungen wie Melamin, Guanamin, Acetoguanamin, Benzoguanamin, Dicyandiamid oder Harnstoff in Gegenwart von Alkoholen, wie Methanol, Ethanol, Propanol, Butanol oder Hexanol mit Aldehyden, insbesondere Formaldehyd, kondensiert. Beispiele für derartige Harze und ihre Herstellung werden in "Houben-Weyl, Methoden der organischen Chemie" 1963, Seite 357, beschrieben.

Als Vernetzungsmittel können auch blockierte Polyisocyanate eingesetzt werden. Es können beliebige Polyisocyanate benutzt werden, bei denen die Isocyanatgruppen mit einer isocyanatreaktiven, flüchtigen, monofunktionellen Verbindung umgesetzt worden sind. Bei der Herstellung der blockierten Polyisocyanate können beliebige für die Vernetzung geeignete organische Polyisocyanate verwendet werden, z.B. die unter III schon beschrieben wurden.

Für die Blockierung der Polyisocyanate können übliche Blockierungsmittel, z.B. beliebige aliphatische, cycloaliphatische oder aromatische Alkylmonoalkohole oder Oxime, wie Methylethylketonoxim, Acetonoxim und Cyclohexanonoxim sowie auch Caprolactame, Phenole und Hydroxamsäureester verwendet werden. Bevorzugte Blockierungsmittel sind Malonester oder Acetessigester. Ein Teil der Blockierungsmittel kann zur Verbesserung der Emulgierbarkeit aus Polyalkylenmonoethern, insbesondere Polyethylenmonoalkylethern bestehen.

Für Zweikomponenten-Überzugsmittel werden die Vernetzer unmittelbar vor der Applikation der Dispersion zugesetzt. Es werden dabei bevorzugt nicht-blockierte Isocyanate eingesetzt. Diese sind bekannt, es handelt sich beispielsweise um die unter III erwähnten lacküblichen Di- und Polyisocyanate.

Weiterhin kann das Überzugsmittel übliche lacktechnische Additive enthalten, beispielsweise rheologiebeeinflussende Mittel, wie hochdisperse Kieselsäure, Schichtsilikate oder polymere Harnstoffverbindungen; Verdicker, Antiabsetzmittel, Verlaufsmittel, Lichtschutzmittel, Antischaummittel, wie beispielsweise silikonhaltige Verbindungen; Netzmittel sowie haftvermittelnde Substanzen. Unter Netzmittel werden auch bekannte Pastenharze verstanden, wie sie z.B. in der DE-A-40 00 889 beschrieben sind, die zum besseren Dispergieren und Vermahlen der Pigmente eingesetzt werden können. Zum Beschleunigen der Härtung können Katalysatoren eingesetzt werden, es ist jedoch auch möglich durch thermische Energie ohne Einsatz eines Katalysators zu härten.

Als in geringen Mengen vorhandene Lösemittel sind übliche lacktechnische Lösemittel geeignet, diese können von der Herstellung der Bindemittel stammen oder sie werden separat zugegeben.

Als Pigmente können übliche anorganische oder anorganische Farbpigmente eingesetzt werden, wie Chinacridone, Perylene und Phthalocyanine oder Ruß, Titandioxid oder Eisenoxidpigmente, transparente Pigmente, z.B. mikronisiertes Titandioxid, mikronisiertes Bariumsulfat oder Siliciumdioxid sowie auch Füllstoffe zugesetzt werden. Mit diesen Farbpigmenten werden bevorzugt Uni-Lacke hergestellt. Es können auch Effektpigmente, wie Metallic-Pigmente eingesetzt werden. Hieraus werden bevorzugt Metallic-Basislacke hergestellt.

Die Methoden zur Herstellung der erfindungsgemäßen Überzugsmittel sind bekannt. Beispielsweise können die Pigmente und/oder Füllstoffe in einem Teil der Bindemitteldispersion, der Netzmittel oder von wäßrigen oder konventionellen Pastenbindemitteln dispergiert und vermahlen werden. Diese Pigmentzubereitungen werden in der wäßrigen Bindemitteldispersion einemulgiert. Danach können weitere Lackbestandteile zugesetzt werden. Gegebenenfalls werden der Festkörper und der pH-Wert des Überzugsmittels eingestellt.

Aus den Bindemitteln können wäßrige Überzugsmittel, z.B. für farbgebende Basisschichten, Füller oder Steinschlagschutzschichten oder Uni-Decklacke hergestellt werden. Besonders geeignet sind die Bindemittel für die Herstellung von wäßrigen Basislacken.

Die aus den erfindungsgemäßen Polyurethandispersionen hergestellten Überzugsmittel können nach bekannten Verfahren appliziert werden, z.B. durch Tränken, Fluten oder Spritzen. Danach werden die Filme physikalisch getrocknet oder chemisch vernetzt, z.B. als 1-Komponenten-Material oder bei Raumtemperatur vernetzt als 2-Komponenten-Systeme. Es können Einschichtlackierungen oder Mehrschichtlackierungen hergestellt werden. Es können z.B. die in der Automobilindustrie üblichen Substrate, wie Stahl, Aluminium, Kunststoffteile, beschichtet werden. Die erfindungsgemäße wäßrige Dispersion zeichnet sich durch eine vorzügliche Verträglichkeit mit weiteren Bindemittelkomponenten wie Polyestern etc. aus. Die erfindungsgemäßen Überzugsmittel ergeben dabei stabile optisch einwandfreie Überzüge mit einer guten Zwischenschichthaftung und einer hohen Beständigkeit gegen chemische und Bewitterungseinflüsse.

**Beispiele:**

| Abkürzungen: | |
|---|---|
| Methylethylketon | MEK |
| Methylisobutylketon | MIBK |
| Isophorondiisocyanat | IPDI |
| N-Methylpyrrolidon | NMP |
| Dimethylolpropionsäure | DMPA |
| Hydroxypropylacrylat | HPA |
| Trimethylolpropan | TMP |
| Dibutylzinndilaurat | DBTL |
| Dimethylisopropanolamin | DMIPA |
| Butylmethacrylat | BMA |
| Butylacrylat | BA |
| Hydroxyethylacrylat | HEA |

| Praktisch bestimmte Endwerte: | |
|---|---|
| Festkörper (FK) | trocknen 1 Stunde bei 150°C nach DIN |
| Viskosität | gemessen 50 % FK in MIBK (23°C) |
| OH-Zahl (OHZ) | mg KOH/g FK |
| Säurezahl (SZ) | mg KOH/g FK |
| Wasser | vollentsalztes Wasser |
| Molmasse | Zahlenmittel (Mn) |

**Bestimmung der nicht löslichen, vernetzten Bindemittelanteile**

Auf der Analysenwaage wird eine Probenmenge in einem Erlenmeyerkolben eingewogen, die ca. 0,3 g Festharz enthält.

Als Lösemittel werden 30 ml Tetrahydrofuran zugegeben.

Der Erlenmeyerkolben wird mit einem Glasstopfen verschlossen und 30 Minuten mit einem Magnetrührer rühren gelassen.

Anschließend wird der Kolbeninhalt quantitativ in eine zuvor gewogene Zentrifugenhülse gespült, 30 Minuten bei 21000 U/min. zentrifugiert und überstehende Phase abdekantiert.

Die Zentrifugenhülse mit Zentrifugat wird 30 Minuten bei 150°C im Trockenschrank getrocknet. Nach Abkühlung auf Raumtemperatur wird auf der Analysenwaage auf 0,1 mg genau zurückgewogen.

Auswertung der Messung:

$$\% \, B = \frac{A \times 100 \, \%}{E}$$

B = nicht löslicher vernetzter Anteil in %
A = Auswaage in g
E = Einwaage Festharz in g

Als Polyester wird ein handelsüblicher Polyester mit einer OHZ 105 und einer Molmasse 1000 g/mol eingesetzt.

Als Initiator wird ein handelsüblicher Initiator, tert.-Butylperoctoat, eingesetzt.

**A. Vorprodukte**

**Herstellungsbeispiel A1:**

433 g Butylacetat werden auf 110°C erhitzt. Dann wird ein Gemisch bestehend aus 399 g HEA, 601 g BA und 7,5 g eines Initiators in 4 Stunden zugetropft. Danach wird eine Stunde die Temperatur gehalten, dann zusätzlich 2,5 g Initiator zugegeben. Nachdem der Ansatz eine weitere Stunde bei 110°C gehalten wird, wird gekühlt und abgefüllt.

| FK | 69,1 % |
|---|---|
| Viskosität | 1010 mPas |
| OHZ | 200 |

**Herstellungsbeispiel A2:**

536 g MIBK werden auf 110°C erhitzt. Dann wird ein Gemisch bestehend aus 644 g BMA, 128 g BA, 464 g HEA und 10 g Initiator in 4 Stunden zugetropft. Danach wird eine Stunde die Temperatur gehalten, dann weitere 5 g Initiator zugegeben. Nachdem der Ansatz eine weitere Stunde bei 110°C gehalten wird, wird er gekühlt und abgefüllt.

| FK | 71,7 % |
|---|---|
| Viskosität | 1200 mPas |
| OHZ | 174 |

**Herstellungsbeispiel A3:**

1797 g MIBK werden auf 100°C erhitzt. Dann wird ein Gemisch bestehend aus 3320 g HPA, 830 g BA und 41 g Initiator in 4 Stunden zugetropft.

Danach wird eine Stunde die Temperatur gehalten und dann mit 12 g Initiator versetzt. Nachdem der Ansatz eine weitere Stunde bei 110°C gehalten wird, wird gekühlt und abgefüllt.

| | |
|---|---|
| FK | 68,6 % |
| Viskosität | 210 mPas |
| OHZ | 292 |

**B. Dispersionen**

**Beispiel B4:**

Ein Gemisch aus 220 g DMPA, 3385 g MEK, 1683 g NMP wird auf 80°C erhitzt. Nachdem die DMPA gelöst ist, wird auf 50°C gekühlt und 888 g IPDI zugegeben. Es wird auf 80°C geheizt bis eine NCO-Zahl von 3,3 erreicht ist. Dann wird auf 50°C gebracht und 3249 g Polyester und 20 g TMP zugesetzt. Anschließend wird bei 80°C gehalten, bis alles Isocyanat umgesetzt ist (NCO-Zahl kleiner 0,3). Bei 50°C werden 927 g Al, 222 g IPDI und 7 g DBTL zusammen zugesetzt und auf 80°C geheizt. Nachdem eine NCO-Zahl von 0,3 erreicht ist, wird bei 50°C 270 g DMIPA-Lösung (50 % Wasser) zugesetzt. Nach einer halben Stunde werden 11318 g Wasser in 10 Minuten zugetropft. Unter Vakuum wird auf 85°C geheizt, wobei das MEK und das Butylacetat abdestilliert werden.

Es entsteht eine weiße Dispersion.

| | |
|---|---|
| FK | 34,0 % |
| SZ | 21,5 |
| pH-Wert | 7,4 |
| Vernetzer Anteil | 3,3 % |

**Beispiel B5:**

220 g DMPA, 3385 g MEK, 1683 g NMP werden vorgelegt und auf 80°C erhitzt. Nachdem die DMPA gelöst ist, wird auf 50°C gekühlt und 888 g IPDI zugegeben. Es wird auf 80°C geheizt bs eine NCO-Zahl von 3,2 erreicht ist. Dann wird auf 50°C gekühlt und 3249 g Polyester und 20 g TMP zugesetzt. Anschließend wird bei 80°C gehalten, bis das Isocyanat umgesetzt ist. Bei 50°C werden 980 g A2, 222 g IPDI und 7 g DBTL auf einmal zugesetzt und auf 80°C geheizt. Nachdem eine NCO-Zahl von 0,3 erreicht ist, wird auf 50°C gekühlt und es werden 270 g DMIPA-Lösung (50 %) zugesetzt. Nach 15 Minuten werden 8414 g Wasser in 20 Minuten zugetropft. Unter Vakuum wird auf 80°C geheizt, wobei das MEK und das MIBK abdestilliert werden.

Es entsteht eine weiße, stabile Dispersion.

| | |
|---|---|
| FK | 35,4 % |
| SZ | 20,2 |
| pH-Wert | 7,5 |
| Vernetzer Anteil | 2,5 % |

**Beispiel B6:**

265 g DMPA, 3020 g Aceton und 1657 g NMP werden vorgelegt und auf 60°C erhitzt. Nachdem die DMPA gelöst ist, wird bei 50°C 888 g IPDI zugegeben. Dann wird auf 65°C geheizt bis eine NCO-Zahl von 2,9 erreicht ist. Bei 50°C wird 3160 g Polyester und 17 g TMP zugesetzt. Anschließend wird wieder bei 65°C gehalten, bis das Isocyanat abreagiert ist (NCO-Zahl kleiner 0,3). Bei 50°C werden 933 g A3, 222 g IPDI und 5 g DBTL auf einmal zugesetzt und 65°C geheizt. Bei einer NCO-Zahl von 0,4 wird auf 50°C gekühlt und 367 g DMIPA-Lösung (50 %) zugesetzt. Nach 10 Minuten werden 7628 g Wasser in 10 Minuten zugetropft. Unter Vakuum wird auf 85°C geheizt, wobei Aceton und MIBK abdestilliert werden.

Es entsteht eine weiße, stabile Dispersion.

| FK | 38,9 % |
|---|---|
| SZ | 23,2 |
| pH-Wert | 8,4 |
| Vernetzer Anteil | 5,1 % |

## Beispiel B7:

2809 g Polyester, 17 g TMP, 174 g DMPA, 645 g A3 und 636 g NMP werden vorgelegt und auf 80°C erhitzt. Nachdem die DMPA gelöst ist, wird auf 50°C gekühlt und 888 g IPDI zugegeben. Es wird auf 80°C geheizt und dort gehalten, dabei 636 g NMP zugegeben bis eine NCO-Zahl von 0,3 erreicht ist. Bei 50°C werden 222 g IPDI und 5 g DBTL zugesetzt und auf 80°C geheizt. Es werden 2924 g MEK zugesetzt und die Reaktion fortgeführt, bis eine NCO-Zahl von 0,4 erreicht ist. Bei 50°C werden 240 g DMIPA-Lösung (50 %) zugesetzt. Nach 3 Minuten werden 510 g Wasser zugesetzt. Nach jeweils 3 Minuten werden dann 669 g, 669 g, 1337 g, 2006 g und 2006 g Wasser zugesetzt. Unter Vakuum wird auf 80°C geheizt, wobei das MEK und das MIBK abdestilliert werden.
Es entsteht eine weiße Dispersion.

| FK | 32,0 % |
|---|---|
| SZ | 20,2 |
| pH-Wert | 7,8 |
| Vernetzer Anteil | 4,2 % |

## Beispiel B8:

189 g DMPA, 3030 g MEK und 1292 g NMP werden vorgelegt und auf 80°C erhitzt. Nachdem die DMPA gelöst ist, wird bei 50°C 888 g IPDI zugegeben. Dann wird auf 80°C geheizt bis eine NCO-Zahl von 4,2 erreicht ist. Dann werden bei 50°C 2784 g Polyester und 16 g TMP zugesetzt. Anschließend wird wieder bei 80°C gehalten, bis die NCO-Zahl kleiner 0,3 ist. Bei 50°C werden dann 222 g IPDI und 5 g DBTL auf einmal zugesetzt und auf 80°C geheizt. Nachdem eine NCO-Zahl von 0,9 erreicht ist, wird auf 50°C gekühlt und es werden 853 g A3 zugesetzt. Dann wird bis zu einer NCO-Zahl von 0,3 bei 80°C gehalten, um dann 232 g DMIPA-Lösung (50 %) zuzusetzen. Nach 20 Minuten werden 7098 g Wasser in 15 Minuten zugetropft. Unter Vakuum wird auf 85°C geheizt, wobei das MEK und das MIBK abdestilliert werden.
Es entsteht eine Dispersion.

| FK | 35,2 % |
|---|---|
| SZ | 19,7 |
| pH-Wert | 8,3 |
| Vernetzer Anteil | 3,5 % |

## Beispiel B9:

174 g DMPA, 6891 g Aceton werden vorgelegt und auf 70°C erhitzt. Nachdem die DMPA gelöst ist, wird bei 50°C 888 g IPDI zugegeben. Dann wird bei 70°C so lange gehalten, bis eine NCO-Zahl von 2,8 erreicht ist. Bei 50°C werden 2843 g Polyester und 17 g TMP zugesetzt. Anschließend wird bei 70°C gehalten, bis die NCO-Zahl kleiner 0,3 ist. Bei 50°C werden 1093 g A3 und 222 g IPDI und 5 g DBTL zugesetzt und bei 65°C bis zu einer NCO-Zahl von 0,3 umgesetzt auf 50°C gekühlt und werden 213 g DMIPA-Lösung (50 %) zugesetzt. Nach 15 Minuten werden 9331 g Wasser in 10 Minuten zugetropft. Unter Vakuum wird auf 85°C geheizt, wobei das Aceton und das MIBK abdestilliert werden.
Es entsteht eine weiße, stabile Dispersion, die sehr gute Trocknungseigenschaften besitzt.

| FK | 40,1 % |
|---|---|
| SZ | 18,2 |
| pH-Wert | 7,5 |

**Beispiel B10:**

174 g DMPA und 1493 g NMP werden vorgelegt und auf 80°C erhitzt. Nachdem die DMPA gelöst ist, wird auf 50°C gekühlt und 578 g IPDI zugegeben. Es wird bei 80°C umgesetzt, bis eine NCO-Zahl von 5,1 erreicht ist. Bei Raumtemperatur werden 2809 g Polyester und 17 g TMP, 2129 g MEK und 1173 g A3, wobei das Acrylat separat bis zu einer NCO-Zahl von 12 % mit IPDI vorher umgesetzt wurde. Bei 80°C wird bis zur NCO-Zahl kleiner 0,4 umgesetzt. Bei 50°C werden 222 g IPDI und 6 g DBTL auf einmal zugesetzt und bis 80°C zu einer NCO-Zahl von 0,3 umgesetzt, bei 70°C werden 214 g DMIPA-Lösung (50 %) zugesetzt. Nach 20 Minuten werden 7439 g Wasser in 20 Minuten zugetropft. Unter Vakuum wird auf 85°C geheizt, wobei das MEK und das MIBK abdestilliert werden.

| | |
|---|---|
| FK | 32,4 % |
| SZ | 19,6 |
| Vernetzer Anteil | 2,9 % |

Aus der Dispersion werden wäßrige Metallic-Basislacke sowie Uni-Basislacke hergestellt. Diese zeigen einen guten Metallic-Effekt sowie eine gute Zwischenschichthaftung zur nachfolgenden Klarlackschicht.

**Beispiel B11:**

72 g DMPA, 951 g Polyester, 407 g NMP und 924 g Aceton werden vorgelegt und auf 65°C erhitzt. Nachdem die DMPA gelöst ist, wird auf 50°C gekühlt und dann 142 g IPDI und 1,5 g DBTL zugegeben. Dann wird auf 65°C geheizt und solange gehalten bis eine NCO-Zahl kleiner 0,3 erreicht ist. Bei 50°C werden weitere 36 g IPDI zugegeben, auf 65°C geheizt und 2 Stunden bei dieser Temperatur gehalten. Bei 50°C werden dann 250 g Acrylatharzvorprodukt A3 zugesetzt und bei 65°C gehalten, bis eine NCO-Zahl kleiner 0,3 erreicht ist. Ist dieser Wert erreicht, wird auf 50°C gekühlt und 134 g DMIPA-Lösung (50 %ig) zugesetzt. Nach 15 Minuten werden 2085 g Wasser in 15 Minuten zugetropft. Unter Vakuum wird auf 85°C geheizt, wobei das Aceton und das MIBK abdestilliert werden.

| Dispersionsendwerte | |
|---|---|
| FK | 34,7 % |
| SZ | 25,4 |
| pH-Wert | 8,7 |
| OH-Zahl | 100 mg KOH/g (auf Festharz bezogen) |
| Vernetzer Anteil | 4,8 %. |

**Beispiel B12:**

65 g DMPA, 789 g Polyester, 365 g NMP und 866 g Aceton werden vorgelegt und auf 65°C erhitzt. Nachdem die DMPA gelöst ist, wird auf 50°C gekühlt und dann 237 g IPDI und 1,4 g DBTL zugegeben. Dann wird auf 65°C geheizt und solange gehalten, bis eine NCO-Zahl kleiner 0,3 erreicht ist. Bei 50°C werden weitere 71 g IPDI zugegeben, auf 65°C geheizt und 2 Stunden bei dieser Temperatur gehalten. Bei 50°C werden dann 455 g Acrylatharzvorprodukt A3 zugesetzt und bei 65°C gehalten, bis eine NCO-Zahl kleiner 0,3 erreicht ist. Anschließend wird auf 50°C gekühlt und 95 g DMIPA-Lösung (50 %ig) zugesetzt. Nach 15 Minuten werden 2357 g Wasser in 15 Minuten zugetropft. Unter Vakuum wird auf 85°C geheizt, wobei das Aceton und das MIBK abdestilliert werden.

| Dispersionsendwerte: | |
|---|---|
| FK | 37,3 % |
| SZ | 21,9 |
| pH-Wert | 8,3 |
| OH-Zahl | 45 mg KOH/g (auf Festharz bezogen) |
| Vernetzter Anteil | 5,4 %. |

**Patentansprüche**

1. Wäßrige Bindemitteldispersion, erhältlich durch gemeinsame Kettenverlängerung von

I. einem oder mehreren, ionische Gruppen oder in ionische Gruppen überführbare Gruppen tragenden harnstoffgruppenfreien Polyurethanen mit im wesentlichen endständigen OH-Gruppen, mit einem Zahlenmittel der Molmasse (Mn) von 1000 bis 10000, einer Säurezahl von 5 bis 50 und einer OH-Zahl von 5 bis 50 und

II. einem oder mehreren hydroxylgruppenhaltigen Polymeren auf der Basis ethylenisch ungesättigter Monomerer, mit einer Säurezahl von 0 bis 20, einer OH-Zahl von 150 bis 400 und einem Zahlenmittel der Molmasse (Mn) von 2000 bis 20000, wobei das molare Verhältnis der Hydroxylgruppen der Komponente I zu denen der Komponente II bei 1 : 6 bis 1,0 : 0,5 liegt, mit

III. einem oder mehreren Diisocyanaten, in einem molaren Verhältnis der OH-Gruppen aus den Komponenten I und II zu den NCO-Gruppen der Komponente III von 1,05 : 1 bis 10 : 1,

in wasserfreiem Medium, Neutralisation mindestens eines Teils der vorhandenen in ionische Gruppen überführbaren Gruppen sowie Überführung des entstehenden Produktes in die Wasserphase.

2. Verfahren zur Herstellung von wäßrigen Bindemitteldispersionen, dadurch gekennzeichnet, daß man

I. ein oder mehrere ionische Gruppen oder in ionische Gruppen überführbare Gruppen tragende harnstoffgruppenfreie Polyurethane mit im wesentlichen endständigen OH-Gruppen, mit einem Zahlenmittel der Molmasse (Mn) von 1000 bis 10000, einer Säurezahl von 5 bis 50 und einer OH-Zahl von 5 bis 50, zusammen mit

II. einem oder mehreren hydroxylgruppenhaltigen Polymeren auf der Basis ethylenisch ungesättigter Monomerer, mit einer Säurezahl von 0 bis 20, einer OH-Zahl von 150 bis 400 und einem Zahlenmittel der Molmasse (Mn) von 2000 bis 20000, wobei das molare Verhältnis der Hydroxylgruppen der Komponente I Zu denen der Komponente II bei 1 : 6 bis 1,0 : 0,5 liegt,

in wasserfreiem Medium einer Kettenverlängerung unterzieht, durch Umsetzung mit

III. einem oder mehreren Diisocyanaten, in einem molaren Verhältnis der OH-Gruppen aus den Komponenten I und II zu den NCO-Gruppen der Komponente III von 1,05 : 1 bis 10 : 1,

worauf man mindestens einen Teil der vorhandenen in ionische Gruppen überführbaren Gruppen neutralisiert und das erhaltene Produkt in die Wasserphase überführt.

3. Dispersion und Verfahren nach einem der vorhergehenden Ansprüche, dadurch gekennzeichnet, daß die Polyurethane der Komponente I ausgehend von Polyesterpolyolen, Polycarbonatpolyolen und/oder Polyetherpolyolen hergestellt wurden.

4. Dispersion und Verfahren nach einem der vorhergehenden Ansprüche, dadurch gekennzeichnet, daß die Polymeren der Komponente II hydroxylgruppenhaltige Copolymere von Acrylsäurealkylestern und/oder Methacrylsäurealkylestern sind.

5. Dispersion und Verfahren nach einem der vorhergehenden Ansprüche, dadurch gekennzeichnet, daß die Polymeren der Komponente II eine Säurezahl von unter 5 aufweisen.

6. Dispersion und Verfahren nach einem der vorhergehenden Ansprüche, dadurch gekennzeichnet, daß die Polymeren der Komponente II eine OH-Funktionalität von über 5 OH-Gruppen pro Molekül aufweisen.

7. Dispersion und Verfahren nach einem der vorhergehenden Ansprüche, dadurch gekennzeichnet, daß sie emulgatorfrei ist bzw. daß es in Abwesenheit von externen Emulgatoren durchgeführt wird.

8. Dispersion nach einem der Ansprüche 1 und 3 bis 7, dadurch gekennzeichnet, daß die enthaltenen Bindemittel ein Zahlenmittel der Molmasse von 5000 bis 100000 und eine Säurezahl unter 30 aufweisen.

9. Wäßriges Überzugsmittel, enthaltend eine wäßrige Dispersion gemäß einem der Ansprüche 1 und 3 bis 8.

10. Überzugsmittel nach Anspruch 9, dadurch gekennzeichnet, daß es zusätzliche unterschiedliche Bindemittel und/oder Vernetzer enthält.

**11.** Verwendung der wäßrigen Dispersionen nach einem der Ansprüche 1 und 3 bis 8, sowie der Überzugsmittel nach Anspruch 9 und 10 zur Herstellung von Mehrschichtlackierungen.

**12.** Verwendung nach Anspruch 11 zur Herstellung von Mehrschichtlackierungen auf dem Kraftfahrzeugsektor.

**Claims**

**1.** An aqueous binder vehicle dispersion, obtainable by the combined chain-lengthening of

I. one or more polyurethanes which comprise ionic groups or groups which can be converted into ionic groups, which are free from urea groups, and which comprise OH groups which are substantially terminal, with a number average molecular weight (Mn) of 1000 to 10,000, an acid number of 5 to 50 and an OH number of 5 to 50, and

II. one or more polymers which contain hydroxyl groups and which are based on ethylenically unsaturated monomers, with an acid number of 0 to 20, an OH number of 150 to 400 and a number average molecular weight (Mn) of 2000 to 20,000, wherein the molar ratio of the hydroxyl groups of component I to those of component II ranges from 1: 6 to 1.0 : 0.5, with

III. one or more diisocyanates, in a molar ratio of the OH groups of components I and II to the NCO groups of component III of 1.05 : 1 to 10 : 1,

in a non-aqueous medium, neutralisation of at least part of the groups which are present and which can be converted into ionic groups, and conversion of the resulting product into an aqueous phase.

**2.** A method of producing aqueous binder vehicle dispersions, characterised in that

I. one or more polyurethanes which comprise ionic groups or groups which can be converted into ionic groups, which are free from urea groups, and which comprise OH groups which are substantially terminal, with a number average molecular weight (Mn) of 1000 to 10,000, an acid number of 5 to 50 and an OH number of 5 to 50, are subjected to chain extension in a non-aqueous medium together with

II. one or more polymers which contain hydroxyl groups and which are based on ethylenically unsaturated monomers, with an acid number of 0 to 20, an OH number of 150 to 400 and a number average molecular weight (Mn) of 2000 to 20,000, wherein the molar ratio of the hydroxyl groups of component I to those of component II ranges from 1 : 6 to 1.0 : 0.5,
by reaction with

III. one or more diisocyanates, in a molar ratio of the OH groups of components I and II to the NCO groups of component III of 1.05 : 1 to 10 : 1,

whereupon at least part of the groups which are present and which can be converted into ionic groups are neutralised and the product obtained is converted into an aqueous phase.

**3.** A dispersion and a method according to any one of the preceding claims, characterised in that the polyurethanes of component I have been produced from polyester polyols, polycarbonate polyols and/or polyether polyols.

**4.** A dispersion and a method according to any one of the preceding claims, characterised in that the polymers of component II are copolymers, which contain hydroxyl groups, of alkyl esters of acrylic acid and/or of alkyl esters of methacrylic acid.

**5.** A dispersion and a method according to any one of the preceding claims, characterised in that the polymers of component II have an acid number less than 5.

**6.** A dispersion and a method according to any one of the preceding claims, characterised in that the polymers of component II have an OH-functionality corresponding to more than 5 OH groups per molecule.

7. A dispersion and a method according to any one of the preceding claims, characterised in that the dispersion is free from emulsifier and that the method is carried out in the absence of external emulsifiers.

8. A dispersion according to any one of claims 1 or 3 to 7, characterised in that the binder vehicles which are contained have a number average molecular weight of 5000 to 100,000 and an acid number less than 30.

9. An aqueous coating medium containing an aqueous dispersion according to any one of claims 1 or 3 to 8.

10. A coating medium according to claim 9, characterised in that it additionally contains different binder vehicles and/ or crosslinking agents.

11. The use of the aqueous dispersions according to any one of claims 1 or 3 to 8 and of the coating media according to claims 9 or 10 for the production of multi-layer lacquer coatings.

12. A use according to claim 11 for the production of multi-layer lacquer coatings for the motor vehicle sector.


**Revendications**

1. Dispersion aqueuse de liant, qu'on obtient par allongement global de chaîne

I. d'un ou de plusieurs polyuréthannes exempts de groupes urée portant des groupes ioniques ou des groupes transformables en groupes ioniques, ayant essentiellement des groupes OH terminaux, avec une masse molaire moyenne en nombre ($M_n$) de 1000 à 10000, un indice d'acide de 5 à 50 et un indice OH de 5 à 50 et
II. d'un ou de plusieurs polymères contenant des groupes hydroxyle à base de monomères éthyléniquement insaturés, avec un indice d'acide de 0 à 20, un indice OH de 150 à 400 et une masse molaire moyenne en nombre ($M_n$) de 2000 à 20000, dans lesquels le rapport molaire des groupes hydroxyle du composant I par rapport à ceux du composant II se situe de 1 : 6 à 1,0 : 0,5, avec
III. un ou plusieurs diisocyanates, dans un rapport molaire des groupes OH des composants I et II par rapport aux groupes NCO du composant III de 1,05 : 1 à 10 : 1,

en milieu acide, par neutralisation d'au moins une partie des groupes disponibles transformables en groupes ioniques et transformation du produit formé dans la phase aqueuse.

2. Procédé de préparation de dispersions aqueuses de liant, caractérisé en ce que qu'on réalise un allongement de chaîne en milieu anhydre

I. d'un ou de plusieurs polyuréthannes exempts de groupes urée portant des groupes ioniques ou des groupes transformables en groupes ioniques, ayant essentiellement des groupes OH terminaux, avec une masse molaire moyenne en nombre ($M_n$) de 1000 à 10000, un indice d'acide de 5 à 50 et un indice OH de 5 à 50, avec en même temps
II. un ou plusieurs polymères contenant des groupes hydroxyle à base de monomères éthyléniquement insaturés, avec un indice d'acide de 0 à 20, un indice OH de 150 à 400 et une masse molaire moyenne en nombre ($M_n$) de 2000 à 20000, dans lesquels le rapport molaire des groupes hydroxyle du composant I par rapport à ceux du composant II se situe de 1 : 6 à 1,0 : 0,5, par réaction avec
III. un ou plusieurs diisocyanates, dans un rapport molaire des groupes OH des composants I et II par rapport aux groupes NCO du composant III de 1,05 : 1 à 10 : 1,

dans lequel on neutralise au moins une partie des groupes disponibles transformables en groupes ioniques et on transforme le produit obtenu dans la phase aqueuse.

3. Dispersion et procédé selon une des revendications précédentes, caractérisés en ce que les polyuréthannes du composant I ont été préparés à partir de polyester-polyols, de polycarbonate-polyols et/ou de polyéther-polyols.

4. Dispersion et procédé selon une des revendications précédentes, caractérisés en ce que les polymères du composant II sont des copolymères contenant des groupes hydroxyle d'esters alkyliques d'acide acrylique et/ou d'esters alkyliques d'acide méthacrylique.

**5.** Dispersion et procédé selon une des revendications précédentes, caractérisés en ce que les polymères du composant II présentent un indice d'acide de moins de 5.

**6.** Dispersion et procédé selon une des revendications précédentes, caractérisés en ce que les polymères du composant II présentent une fonctionnalité OH de plus de 5 groupes OH par molécule.

**7.** Dispersion et procédé selon une des revendications précédentes, caractérisés en ce la dispersion est sans agent émulsionnant et que le procédé est réalisé en l'absence d'agent émulsionnant externe.

**8.** Dispersion selon l'une des revendications 1 et 3 à 7, caractérisée en ce que les liants inclus présentent une masse molaire moyenne en nombre de 5000 à 100000 et un indice d'acide de moins de 30.

**9.** Matériau de revêtement, contenant une dispersion aqueuse selon l'une des revendications 1 et 3 à 8.

**10.** Matériau de revêtement selon la revendication 9, caractérisé en ce qu'il contient différents liants et/ou agents de réticulation additionnels.

**11.** Utilisation des dispersions aqueuses selon l'une des revendications 1 et 3 à 8, ainsi que des matériaux de revêtement selon les revendications 9 et 10 pour la préparation de peintures multicouches.

**12.** Utilisation selon la revendication 11 pour la préparation de peintures multicouches dans le secteur des véhicules à moteur.